Europäisches Patentamt

(19) European Patent Office

Office européen des brevets

(11) Numéro de publication: **0 152 342**

**A2**

(12) # DEMANDE DE BREVET EUROPEEN

(21) Numéro de dépôt: 85400185.6

(22) Date de dépôt: 05.02.85

(51) Int. Cl.⁴: **B 23 D 1/26**

(30) Priorité: 15.02.84 FR 8402314

(43) Date de publication de la demande:
21.08.85 Bulletin 85/34

(84) Etats contractants désignés:
AT CH DE IT LI

(71) Demandeur: ETABLISSEMENTS MAIER, S.A.
La Verne
F-39200 Saint Claude(FR)

(72) Inventeur: Maier, Josef
Chaumont
F-39200 Saint-Claude(FR)

(74) Mandataire: Levesque, Denys et al,
Cabinet Beau de Loménie 55, rue d'Amsterdam
F-75008 Paris(FR)

(54) Procédé et dispositif de réalisation dans une tête de vis d'une fente de réception d'un tournevis.

(57) L'invention concerne l'usinage de fentes de réception d'un tournevis dans des têtes de vis, par mortaisage à l'aide d'un dispositif comportant des outils (3) en nombre égal à celui des saignées radiales à faire dans les têtes de vis (quatre pour une fente cruciforme par exemple), ces outils étant entraînés en des mouvements de translation déphasés dans un corps (1) non rotatif par une noix (4) exécutant un mouvement de précession autour de l'axe (5) du corps (1) sous l'action d'un arbre coudé (2) rotatif.

Fig. 1

PROCEDE ET DISPOSITIF DE REALISATION DANS UNE TETE DE VIS
D'UNE FENTE DE RECEPTION D'UN TOURNEVIS

L'invention se rapporte tout d'abord à un procédé de réalisation dans une tête de vis d'une fente de réception d'un tournevis, formée par une cavité comportant des saignées radiales.

La réalisation de telles fentes, par exemple de fentes cruciformes, s'effectue traditionnellement par matriçage à froid des têtes de vis. Pareil procédé, s'il autorise une notable rapidité de fabrication, ne comporte cependant pas une grande précision de façonnage.

Le procédé selon l'invention a pour but de remédier à cet inconvénient et de permettre la fabrication d'articles de visserie de précision.

Ce procédé consiste à forer un trou borgne dans la tête de la vis suivant l'axe de cette dernière, puis à usiner la fente par mortaisage oblique de la paroi dudit trou suivant des directions radiales.

Ce procédé, faisant appel à un usinage par enlèvement de matière qui évite l'application des fortes contraintes impliquées par le matriçage, conduit à des vis dont la conformation peut offrir une extrême précision, et ce quel que soit leur type.

L'invention a également pour objet un dispositif permettant de mettre en oeuvre le procédé défini ci-dessus. Ce dispositif comprend un corps ayant une forme générale sensiblement de révolution autour d'un axe et servant de support et de guide à des outils de coupe régulièrement répartis autour dudit axe et susceptibles d'être animés d'un mouvement d'oscillation suivant des directions respectives obliques, également inclinées sur cet axe et convergeant en un point de celui-ci voisin des arêtes de coupe des outils. Ces dernières sont ainsi capables d'attaquer la paroi d'un trou borgne préalablement foré dans une tête de vis et de créer dans celle-ci la fente de forme désirée moyennant une avance progressive de l'outil suivant son axe. Les mouvements oscillants des outils du dispositif sont de préférence déphasés circulairement les uns par rapport aux autres, l'angle de déphasage pouvant être égal à l'angle séparant lesdits outils autour de l'axe du dispositif.

Dans une forme d'exécution avantageuse, les outils du dispositif sont entraînés en mouvement d'oscillation par une noix actionnée suivant un mouvement de précession de son axe autour dudit axe, chaque outil, guidé en translation rectiligne dans le corps suivant sa direction propre d'oscillation, étant accouplé par une articulation à rotule en un point de la périphérie de ladite noix. Le mouvement de précession de cette dernière entraîne les outils en des mouvements de translation déphasés.

Il convient que les centres des articulations à rotule précitées soient disposés sur un cercle centré sur l'axe de précession de la noix et situé dans un plan perpendiculaire à cet axe, lequel coupe sous un petit angle l'axe du corps en un point fixe. Afin d'obtenir un accouplement sans contraintes anormales entre la noix et les outils, animés de mouvements de types différents, le point fixe précité est avantageusement situé sur le segment de l'axe du corps qui est balayé par la perpendiculaire élevée dans un plan radial en chaque point d'articulation d'un outil à la direction de translation de cet outil, ledit point fixe étant situé de préférence au centre du segment précité.

Dans une forme de réalisation plus particulière, le dispositif comporte un arbre coudé comprenant une première partie formant queue d'entraînement en rotation, une deuxième partie dont l'axe légèrement oblique par rapport à l'axe de la première partie définit l'axe de précession de la noix d'entraînement, et une troisième partie de même axe que la première. Cet arbre peut tourner par rapport au corps du dispositif dans des paliers que celui-ci comporte alignés sur son axe et qui coopèrent avec la première et la troisième partie de l'arbre, ainsi que par rapport à la noix d'entraînement dans des paliers que celle-ci comporte alignés sur son axe et qui coopèrent avec la deuxième partie de l'arbre.

Les outils oscillants du dispositif peuvent être équipés de plaquettes de coupe rapportées à leurs extrémités actives. Par ailleurs, le dispositif comporte deux, trois ou quatre outils suivant qu'il est destiné à l'usinage de fentes rectilignes, en étoile à trois branches ou cruciformes.

D'autres caractéristiques et avantages de l'invention ressortiront plus clairement de la description qui va suivre, en regard des dessins annexés, d'un exemple de réalisation non limitatif.

La figure 1 représente, en coupe axiale, un dispositif d'usinage selon l'invention.

Les figures 2 A, B , 3 A, B et 4 A, B illustrent les étapes d'usinage d'une fente cruciforme dans une tête de vis à l'aide du dispositif de la figure 1.

Les figures 5 et 6 représentent des têtes de vis dans lesquelles ont été usinées respectivement une fente rectiligne et une fente étoilée.

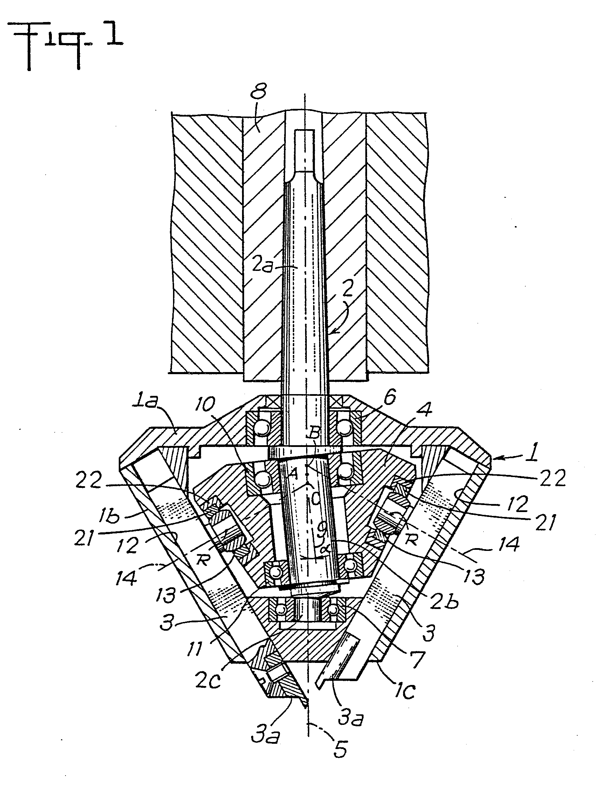

Le dispositif représenté à la figure 1 comprend essentiellement un corps 1, un arbre 2, des outils de coupe 3 et une noix 4 d'entraînement de ces derniers. Le corps 1 offre la forme générale d'un tronc de cône creux de révolution, d'axe 5. Il comporte, alignés sur cet axe, deux paliers 6, 7 constitués par des roulements à billes dans lesquels peut tourner l'arbre 2.

Celui-ci comprend deux parties extrêmes 2a, 2c et une partie intermédiaire 2b. Les parties extrêmes 2a, 2c, alignées sur l'axe 5, tournent dans les paliers 6, 7 du corps 1. La partie 2a émerge de la grande base 1a du corps 1 pour former une queue d'entraînement en rotation qui est reçue dans un mandrin 8 susceptible de lui communiquer un mouvement de rotation autour de l'axe 5 et un mouvement d'avance suivant ce même axe. La partie intermédiaire 2b présente un léger décalage angulaire par rapport aux parties 2a, 2c, son axe 9 faisant un angle α avec l'axe 5 de ces dernières, qu'il coupe en un point A. A cette partie 2b sont associés deux paliers 10, 11 constitués également par des roulements à billes, sur lesquels est calée la noix 4.

La paroi latérale 1b de forme conique du corps 1 comporte intérieurement quatre couloirs 12 rectilignes convergeant du côté de la petite base 1c du corps 1, également inclinés sur l'axe 5 et répartis à 90° autour de celui-ci. Ces couloirs servent de logement de guidage aux outils de coupe 3, où ceux-ci peuvent coulisser en un mouvement alternatif sous l'action de la noix 4 à la surface latérale tronconique de laquelle chacun d'eux est couplé par une articulation à rotule 13. Les centres R des rotules des quatre articulations de liaison 13 sont situés dans un plan perpendiculaire à l'axe 9 de la noix 4 et répartis à 90° autour de cet axe. Afin d'éviter des contraintes néfastes dans ces articulations 13, il convient que les perpendiculaires 14 élevées des centres R de leurs rotules aux directions de translation des outils 3 rencontrent l'axe 5 au voisinage du point A, autour duquel bascule la noix 4 dans son mouvement de précession. La disposition optimale est celle où le point A se trouve au milieu du segment BC balayé par ces perpendiculaires sur l'axe 5.

Les distorsions restantes peuvent être compensées en prévoyant un certain jeu de montage entre chaque articulation 13 et la noix 4. A cet effet, dans le présent exemple, le siège annulaire 21 recevant la rotule solidaire de l'outil 3 correspondant est porté par une coquille 22 particulière montée avec jeu dans un logement respectif de la noix 4. Les coquilles 22, en nombre égal à celui des articulations 13, forment des segments indépendants dont l'ensemble constitue une couronne autour de l'axe 9 de la noix.

Pour utiliser le dispositif décrit, il suffit de le monter sur un tour à décolleter à la place d'un dispositif de perçage. L'arbre coudé 2 est mis en rotation dans le corps 1, que l'on empêche de tourner. La partie oblique 2b de l'arbre 2 entraîne alors la noix 4 en un mouvement de précession autour de l'axe 5 du corps 1, de sorte que la noix 4 communique, via les articulations à rotule 13, un mouvement de translation alternatif à chacun des outils 3, lesquels oscillent suivant leurs directions longitudinales convergentes avec un déphasage de 90° de chacun

par rapport au suivant.

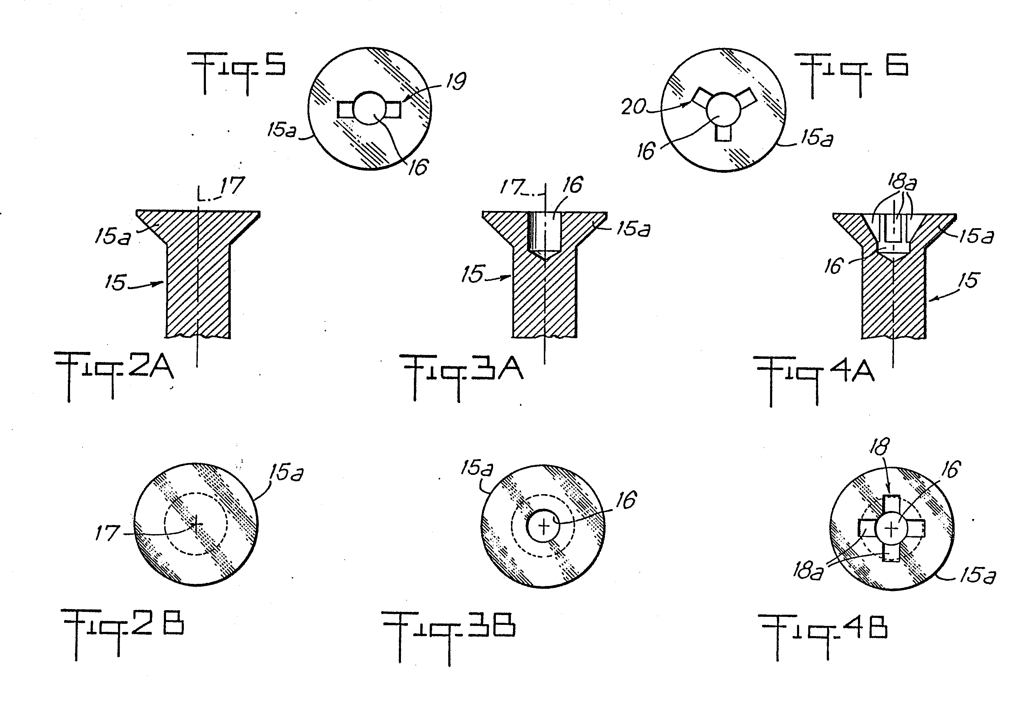

L'usinage de la fente cruciforme d'une vis 15 à l'aide de ce dispositif s'effectue en perçant un trou borgne 16 dans la tête 15a de la vis suivant son axe 17 (figures 3 A, B), puis en amenant le dispositif au-dessus de ce trou, de manière que l'axe 5 du dispositif coincide avec l'axe 17 de la vis 15 et du trou 16.

On met alors en rotation l'arbre 2 du dispositif, en abaissant en une avance progressive son corps 1 (immobilisé en rotation, mais non en translation), de façon que les arêtes de coupe 30 des quatre outils 3, situées à leurs extrémités convergentes et pouvant appartenir à des plaquettes de coupe rapportées 3a, viennent mordre à tour de rôle la paroi du trou 16 et y réaliser par mortaisage des saignées obliques 18a constituant la fente cruciforme 18 désirée pour la vis (figures 4 A, B). La vitesse d'avance communiquée au dispositif est choisie en fonction de la matière de la vis à usiner.

La figure 5 montre une tête de vis dans laquelle a été usinée une fente rectiligne 19 à l'aide d'un dispositif ne comportant que deux outils 3 (diamétralement opposés). Dans le cas de la figure 6, il s'agit d'une fente 20 en étoile à trois branches réalisée au moyen d'un dispositif à trois outils disposés à 120°.

REVENDICATIONS

1. Procédé de réalisation dans une tête de vis d'une fente de réception d'un tournevis, formée par une cavité comportant des saignées radiales qui s'étendent obliquement par rapport à l'axe de la cavité,

caractérisé par le fait qu'il consiste à forer un trou borgne dans la tête de la vis suivant l'axe de cette dernière, puis à usiner la fente par mortaisage oblique de la paroi dudit trou suivant des directions radiales.

2. Dispositif permettant de mettre en oeuvre le procédé de la revendication 1, caractérisé par le fait qu'il comprend un corps (1) ayant une forme générale sensiblement de révolution autour d'un axe (5) et servant de support et de guide à des outils de coupe (3) régulièrement répartis autour dudit axe (5) et susceptibles d'être animés d'un mouvement d'oscillation suivant des directions respectives obliques, également inclinées sur cet axe et convergeant en un point de celui-ci voisin des arêtes de coupe (30) des outils.

3. Dispositif selon la revendication 2, caractérisé par le fait que les mouvements oscillants des outils (3) sont déphasés circulairement les uns par rapport aux autres.

4. Dispositif selon la revendication 3, caractérisé par le fait que les outils (3) sont entraînés en mouvement d'oscillation par une noix (4) actionnée suivant un mouvement de précession de son axe (9) autour dudit axe (5) , chaque outil (3), guidé en translation rectiligne dans le corps (1) suivant sa direction propre d'oscillation, étant accouplé par une articulation à rotule (13) en un point de la périphérie de ladite noix.

5. Dispositif selon la revendication 4, caractérisé par le fait que les centres (R) des articulations à rotule (13) sont disposés sur un cercle centré sur l'axe de précession (9) de la noix (4) et situé dans un plan perpendiculaire à cet axe, lequel coupe sous un petit angle ($\alpha$) l'axe (5) du corps (1) en un point fixe (A).

6. Dispositif selon la revendication 5, caractérisé par le fait que le point fixe (A) est situé sur le segment (BC) de l'axe (5) du corps (1) qui est balayé par la perpendiculaire (14) élevée dans un plan radial en chaque point d'articulation (R) d'un outil (3) à la direction de translation de cet outil, ledit point fixe étant situé de préférence au centre du segment (BC) précité.

7. Dispositif selon la revendication 5 ou 6, caractérisé par le fait qu'il comporte un arbre coudé (2) comprenant une première partie (2a) formant queue d'entraînement en rotation, une deuxième partie (2b) dont l'axe légèrement oblique par rapport à l'axe de la première partie définit l'axe de précession (9) de la noix d'entraînement (4), et une troisième partie (2c) de même axe que la première, et que cet arbre peut tourner par rapport au corps (1) du dispositif dans des paliers (6, 7) que celui-ci comporte alignés sur son axe (5) et qui coopèrent avec la première et la troisième partie de l'arbre (2), ainsi que par rapport à la noix d'entraînement (4) dans des paliers (10, 11) que celle-ci comporte alignés sur son axe (9) et qui coopèrent avec la deuxième partie (2b) de l'arbre (2).

8. Dispositif selon l'une quelconque des revendications 2 à 7, caractérisé par le fait que ses outils oscillants (3) sont équipés de plaquettes de coupe rapportées (3a).

9. Dispositif selon l'une quelconque des revendications 2 à 8, caractérisé par le fait qu'il comporte deux, trois ou quatre outils (3) suivant qu'il est destiné à l'usinage de fentes rectilignes (19), en étoile à trois branches (20) ou cruciformes (18).

Fig. 1

Fig.6
Fig.5
Fig.4A
Fig.4B
Fig.3A
Fig.3B
Fig.2A
Fig.2B